Europäisches Patentamt

European Patent Office

Office européen des brevets

(11) Veröffentlichungsnummer: **0 108 212**
A2

(12) ## EUROPÄISCHE PATENTANMELDUNG

(21) Anmeldenummer: 83108691.3

(51) Int. Cl.³: **B 60 C 11/00**

(22) Anmeldetag: 03.09.83

(30) Priorität: 30.10.82 DE 8230530 U

(43) Veröffentlichungstag der Anmeldung:
16.05.84 Patentblatt 84/20

(84) Benannte Vertragsstaaten:
AT CH DE FR GB IT LI SE

(71) Anmelder: Continental Gummi-Werke
Aktiengesellschaft
Königsworther Platz 1
D-3000 Hannover 1(DE)

(72) Erfinder: Trabandt, Hagen
Mozartstrasse 8
D-3163 Sehnde 1(DE)

(72) Erfinder: Bachmann, Willi
Weidenstrasse 6
D-3004 Isernhagen(DE)

(54) **Fahrzeugluftreifen für die Winterverwendung.**

(57) Die Erfindung geht von Reifen dieser Art aus, bei denen der Laufstreifen aus vier Umfangsreihen mit im wesentlichen rechteckigen, sich quer zur Reifenumfangsrichtung erstreckenden Blöcken besteht. Damit diese Reifen nicht nur bei weichem Untergrund, sondern auch bei festem, verschneitem bzw. vereistem Untergrund eine verbesserte Griffigkeit erhalten, sind die zwischen den seitlich außen gelegenen Umfangsreihen befindlichen Blöcke an ihren sich quer zur Reifenumfangsrichtung erstreckenden Rändern mit Feineinschnitten versehen, die zur Reifenumfangsrichtung Winkel von etwa 15 bis 30° bilden sollen. Die mit diesen Feineinschnitten ausgestatteten Randpartien der Blöcke sind zickzack- oder wellenförmig gestaltet, wobei die Feineinschnitte von den Wellentälern dieser Randpartien ausgehen.

EP 0 108 212 A2

./...

Continental Gummi-Werke AG, Hannover

Fahrzeugluftreifen für die Winterverwendung

Die Neuerung betrifft einen Fahrzeugluftreifen für die Winterverwendung, und zwar für die Benutzung an Lastkraftwagen, wobei der Laufstreifen aus vier oder mehr Umfangsreihen aus im wesentlichen rechteckigen, sich quer zur Reifenumfangsrichtung erstreckenden Blöcken besteht.

Derartig gestaltete Laufstreifen zeichnen sich durch eine gute Griffigkeit bei weichem, insbesondere verschneitem Untergrund aus. Gewisse Nachteile können die so ausgeführten Lastkraftwagenreifen jedoch dann haben, wenn bei winterlicher Witterung die Fahrbahn festgefahren bzw. vereist ist.

Demgemäß liegt der Neuerung die Aufgabe zugrunde, die erwähnten Fahrzeugluftreifen so zu verbessern, daß sie nicht nur bei weichem Untergrund eine große Griffigkeit, sondern bei festem, verschneitem bzw. vereistem Untergrund über eine ausreichende Rutschfestigkeit verfügen.

Zur Lösung dieser Aufgabe sind die im Laufflächenmittelbereich, also die zwischen den seitlich außen gelegenen Umfangsreihen befindlichen Blöcke bzw. Klötze an ihren längeren, sich quer zur Reifenumfangsrichtung erstreckenden Rändern mit Feineinschnitten versehen, die sich im wesentlichen in Reifenumfangsrichtung erstrecken, vorzugsweise aber mit der Reifenumfangsrichtung Winkel von etwa 15 bis 30° bilden. Darüber hinaus können auch diese mit den Feineinschnitten ausgestatteten Randpartien zickzack- oder wellenförmig verlaufend ausgeführt sein, wobei die Feineinschnitte jeweils von den Wellentälern bzw. den Einschnitten ausgehen.

In dieser Weise ausgeführte Fahrzeugluftreifen zeigen ein günstiges Verhalten auf Eis und Schnee, zugleich jedoch auch im weichen Schnee bzw. auf weicher Fahrbahn.

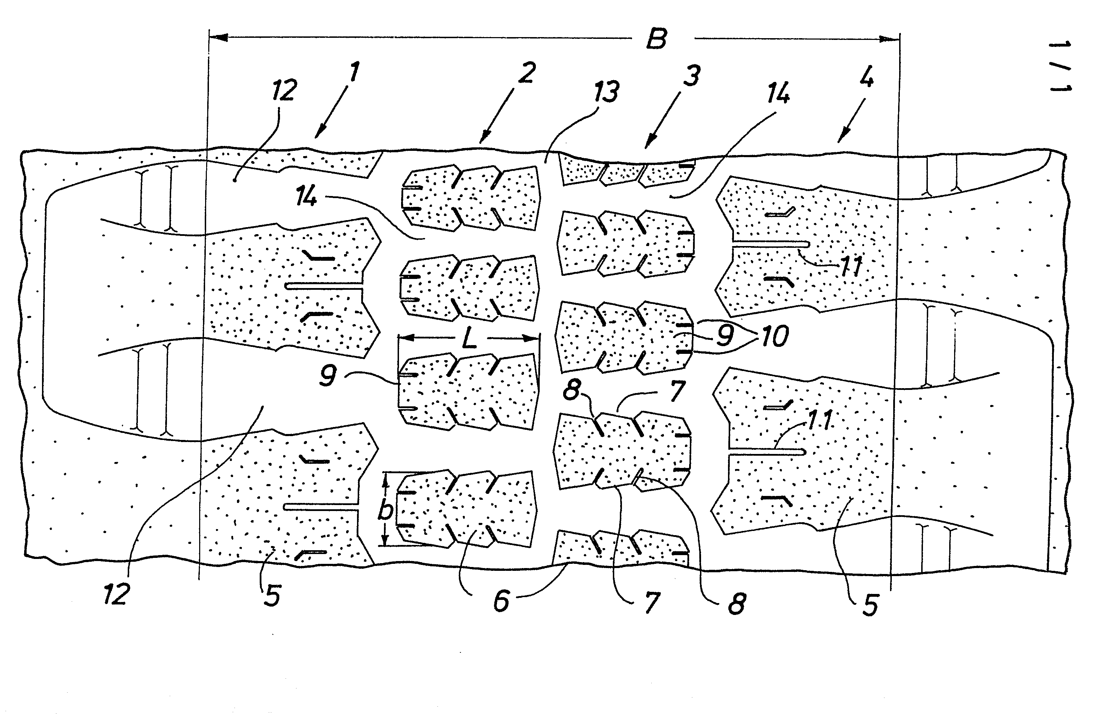

In der Zeichnung ist ein Ausführungsbeispiel der Neuerung dargestellt.

Die Abb. zeigt eine Teildraufsicht auf die Lauffläche eines Winterreifens für Lastkraftwagen.

Das Maß B gibt die Breite der Lauffläche an; die zu beiden Seiten dieses Bereichs wiedergegebenen Profilierungen sind somit Gegenstand der Reifenschultern bzw. der am äußeren Umfang befindlichen Reifenseitenwandabschnitte.

Die Lauffläche des Reifens wird von vier Umfangsreihen 1, 2, 3 und 4 gebildet, von denen sich die Reihen 1 und 4 am Lauflächenrand befinden und aus diesen Gründen vergleichsweise kompakt und standfest gestaltete Blöcke 5 haben. Zwischen den beiden Umfangsreihen 1 und 4 befinden sich die die Umfangsreihen 2 und 3 bildenden Blöcke 6, die ebenso wie die Blöcke 5 einen im wesentlichen rechteckigen Grundriß haben und sich quer zur Reifenumfangsrichtung erstrecken. Die in Drehrichtung vorne und hinten liegenden Kanten 7 der Blöcke 6 sind zickzackförmig verlaufend ausgeführt; sie erstrecken sich aufgrund der rechteckigen Grundrißgestalt der Blöcke 6 im wesentlichen in Reifenquerrichtung.

Die so verlaufenden Kanten 7 sind von Feineinschnitten 8, und zwar jeweils zwei Feineinschnitten 8 durchsetzt, die sich über den größten Teil der Höhe der Blöcke 6 erstrecken, unter einem Winkel von etwa 20$^{\text{o}}$ schräg zur Reifenumfangsrichtung ansteigen und von den Vertiefungen bzw. dem Rücksprung ausgehen, welcher durch die Zickzackform der Kanten 7 bestimmt ist. Dabei verlaufen bei einem Block 6 auf der einen Seite die Feineinschnitte 8 in der einen Schrägrichtung und auf der anderen Seite in der entgegengesetzten Schrägrichtung. Entgegengesetzte Schrägrichtungen sind auch für die einander gegenüberliegenden Kanten 7 in Umfangsrichtung aufeinanderfolgender Blöcke 6 vorgesehen.

Weiterhin sind noch die seitlich außen zu den Blöcken 5 hin gerichteten Kanten 9 mit zwei Feineinschnitten 10 ausgestattet, während die der Lauffflächenmitte zugekehrten Enden der Blöcke 6 keine Feineinschnitte haben.

Die Feineinschnitte 8 erstrecken sich etwa über 1/4 der mittleren Breite b der Blöcke 6, während sich die Feineinschnitte 10 etwa über 1/5 bis 1/10 der Länge L der Blöcke 6 erstrecken.

Die außen am Rand der Lauffläche gelegenen Blöcke 5 haben eine Länge, die etwa der Länge L entspricht. Sie haben jedoch in Umfangsrichtung eine Erstreckung, die dem Doppelten des Maßes b entspricht. Eine Erhöhung der Verformbarkeit an ihren den Blöcken 6 zugekehrten Enden erfolgt durch einen mittig gelegenen Feineinschnitt 11, der etwa über die halbe Quererstreckung der Blöcke 5 verläuft. Am eigentlichen Lauffflächenrand sind somit keine Feineinschnitte vorgesehen.

Zwischen aufeinanderfolgenden Blöcken 5 sind große Abstände 12 vorgesehen, die etwa dem Maß b entsprechen. Auch die die Blöcke 6 begrenzenden Nuten 13 und 14 haben eine erhebliche Breite, und zwar vorzugsweise etwa dem halben Maß b entsprechend.

Schutzansprüche:

1. Für Lastkraftwagen bestimmter Fahrzeugluftreifen für die Winterverwendung, dessen Laufstreifen aus vier oder mehr Umfangsreihen aus im wesentlichen rechteckigen, sich quer zur Reifenumfangsrichtung erstreckenden Blöcken besteht, dadurch gekennzeichnet, daß die zwischen den seitlich außen gelegenen Umfangsreihen (1, 4) befindlichen Blöcke (6) an ihren längeren, sich quer zur Reifenumfangsrichtung erstreckenden Rändern (7) mit Feineinschnitten (8) versehen sind, die sich im wesentlichen in Reifenumfangsrichtung erstrecken, vorzugsweise aber mit der Reifenumfangsrichtung Winkel von etwa 15 bis 30$^0$ bilden.

2. Reifen nach Anspruch 1, dadurch gekennzeichnet, daß die Ränder (7) zickzack- oder wellenförmig verlaufen und die Feineinschnitte (8) von den zurückspringenden Abschnitten der Ränder ausgehen.

3. Reifen nach den Ansprüchen 1 und 2, dadurch gekennzeichnet, daß die Länge der Feineinschnitte (8) etwa 1/4 der mittleren Breite (b) der Blöcke (6) entspricht.

4. Reifen nach den Ansprüchen 1 und 2, dadurch gekennzeichnet, daß auch die im wesentlichen in Reifenumfangsrichtung verlaufenden Kanten, vorzugsweise jedoch lediglich die den Laufflächenrändern zugekehrten Kanten der Blöcke (6) mit Feineinschnitten (10) ausgestattet sind.

5. Reifen nach Anspruch 4, dadurch gekennzeichnet, daß die Feineinschnitte (10) eine Länge haben, die etwa 1/5 bis 1/10 der Länge (L) der Blöcke (6) entspricht.

6. Reifen nach Anspruch 1, dadurch gekennzeichnet, daß die Länge (L) der die Umfangsreihen (1, 4) bildenden Blöcke (5) praktisch der Länge der übrigen Blöcke (6) entspricht und daß die Breite dieser Blöcke (5) etwa doppelt so groß ist wie die Breite (b) der anderen Blöcke (6).

7. Reifen nach den Ansprüchen 1 und 6, dadurch gekennzeichnet, daß der Abstand zwischen aufeinanderfolgenden Blöcken (5) der Umfangsreihen (1, 4) etwa der Breite (b) der anderen Blöcke (6) entspricht.

8. Reifen nach den Ansprüchen 1 und 2, dadurch gekennzeichnet, daß die die Blöcke (6) begrenzenden Nuten (13, 14) eine Breite haben, die etwa der halben Breite (b) der Blöcke (6) entspricht.

9. Reifen nach Anspruch 1, dadurch gekennzeichnet, daß die Feineinschnitte (8) eines Randes (7) eines Blockes (6) in der einen Schrägrichtung und die Feineinschnitte des anderen Randes (7) des Blockes (6) eine entgegengesetzte Schrägrichtung aufweisen.

10. Reifen nach Anspruch 1, dadurch gekennzeichnet, daß die Feineinschnitte (8) einander zugekehrter Ränder (7) in Umfangsrichtung aufeinanderfolgender Blöcke (6) entgegengesetzt schräg zur Reifenumfangsrichtung ansteigen.

11. Reifen nach Anspruch 1, dadurch gekennzeichnet, daß die die seitlich außen gelegenen Blockreihen (1, 4) bildenden Blöcke (5) an ihren der Laufflächenmitte zugekehrten Enden mit Feineinschnitten (11) versehen sind.

12. Reifen nach Anspruch 11, dadurch gekennzeichnet, daß die Feineinschnitte (11) als randoffene Einschnitte sich etwa über die halbe Blocklänge erstrecken.

Hannover, den 28. Oktober 1982
82-15 G/D                    D/Fr